Europäisches Patentamt

European Patent Office

Office européen des brevets

(19)

(11) Veröffentlichungsnummer: **0 263 539 B1**

(12) **EUROPÄISCHE PATENTSCHRIFT**

(45) Veröffentlichungstag der Patentschrift: **18.09.91**

(51) Int. Cl.⁵: **C22B 3/00, C22B 19/00**

(21) Anmeldenummer: **87201586.2**

(22) Anmeldetag: **21.08.87**

(54) **Verfahren zur Aufarbeitung von Rückständen aus der hydrometallurgischen Zink-Gewinnung.**

(30) Priorität: **09.10.86 DE 3634359**

(43) Veröffentlichungstag der Anmeldung:
**13.04.88 Patentblatt 88/15**

(45) Bekanntmachung des Hinweises auf die
Patenterteilung:
**18.09.91 Patentblatt 91/38**

(84) Benannte Vertragsstaaten:
**BE DE ES FR IT NL**

(56) Entgegenhaltungen:
**EP-A- 0 065 815        EP-A- 0 071 684
EP-A- 0 096 499        EP-A- 0 100 237
EP-A- 0 107 401        EP-A- 0 166 710
US-A- 3 976 743        US-A- 4 004 991
US-A- 4 070 260        US-A- 4 274 931
US-A- 4 288 304**

(73) Patentinhaber: **RUHR-ZINK GMBH
Wittener Strasse 1
W-4354 Datteln(DE)**

(72) Erfinder: **von Röpenack, Adolf, Dr.
Hermannstrasse 31
W-4354 Datteln(DE)**
Erfinder: **Böhmer, Winfried, Dr.
Hermannstrasse 25
W-4354 Datteln(DE)**
Erfinder: **Smykalla, Günter
Hohes Ufer 11
W-4358 Haltern(DE)**
Erfinder: **Wiegand, Volker
Hermannstrasse 19
W-4354 Datteln(DE)**

(74) Vertreter: **Rieger, Harald, Dr.
Reuterweg 14
W-6000 Frankfurt a.M.(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Aufarbeitung von Rückständen aus der hydrometallurgischen Zink-Gewinnung, insbesondere aus der Zink-Elektrolyse, in Verbindung mit einer elektrolytischen Zink-Gewinnung.

Bei hydrometallurgischen Verfahren fallen Rückstände an, deren Deponie Schwierigkeiten verursacht und die noch Wertstoffe enthalten. Dies ist insbesondere bei der Zink-Elektrolyse der Fall. Bei der Herstellung der Zinksulfat-Lösung für die Elektrolyse fällt nach der Neutralisation der Lösung vor der Fällung des Eisens ein Rückstand an, der Verunreinigungen wie z.B. Ge, Ga, In, As, Cu, Pb, $SiO_2$, $Al_2O_3$ und auch noch Zn enthält. Dieser Rückstand muß aus dem Prozeß entfernt werden, damit sich der Kreislauf nicht mit diesen Verunreinigungen anreichert oder das ausgefällte Eisen verunreinigt und damit dessen Verwertung beeinträchtigt.

Aus der DE-OS 25 40 64l ist ein solches Verfahren bekannt, bei dem das Röstgut zunächst in einer neutralen Laugung behandelt wird, die $ZnSO_4$-Lösung zur Elektrolyse geleitet wird, und der Laugungsrückstand zweistufig heiß und sauer gelaugt wird. Die erste Stufe der heißen Laugung erfolgt durch Zugabe von Zink-Konzentrat unter reduzierenden Bedingungen. Nach einer eventuellen Vorneutralisation wird der Laugungsrückstand dieser ersten heißen Laugung in der zweiten Stufe mit einer Schwefelsäurelösung behandelt, die wesentlich konzentrierter ist als die Schwefelsäurelösung der ersten Stufe. Von der Lösung werden nicht umgesetztes Zinksulfid-Konzentrat und elementarer Schwefel durch Flotation abgetrennt und der verbleibende Pb-Rückstand abgetrennt. Die Lösung wird in die erste Stufe der heißen Laugung zurückgeführt. Die vom Laugungsrückstand befreite Lösung der ersten Stufe der heißen Laugung wird mit Kalkstein auf einen pH-Wert von etwa 4,5 neutralisiert. Der dabei ausfallende Rückstand besteht hauptsächlich aus $CaSO_4$, enthält die eingangs beschriebenen Verunreinigungen und muß aus dem Kreislauf entfernt werden. In der verbleibenden Lösung wird das Eisen oxidiert und ausgefällt. Die Lösung wird in die neutrale Laugung zurückgeführt. Der bei der Neutralisation anfallende Gips-Rückstand ist stark verunreinigt und kann deshalb schlecht verwendet werden. Eine Deponie führt zu Umweltbelästigung. Außerdem enthält er noch Wertstoffe.

Der Erfindung liegt die Aufgabe zugrunde, solche Rückstände aus der Laugung von Zink enthaltenen Stoffen in der Weise aufzuarbeiten, daß kein Rückstand oder nur ein sehr geringer Rückstand zurückbleibt und die Wertstoffe möglichst weitgehend gewonnen werden.

Die Lösung dieser Aufgabe erfolgt erfindungsgemäß dadurch, daß

a) der Rückstand mit Zellensäure aus der Zink-Elektrolyse bei einer Temperatur von 50 bis 100° C so gelaugt wird, daß am Ende der Laugung eine freie Säurekonzentration von 10 bis 100 g/l vorliegt,

b) der ungelöste Anteil aus der Suspension abgetrennt wird,

c) der abgetrennte Anteil in die heiße saure Laugung der Zink-Elektrolyse geleitet wird,

d) in der Lösung gemäß (b) Kupfer durch Zugabe von feinkörnigem metallischem Eisen ausgefällt wird,

e) das ausgefällte Kupfer abgetrennt wird,

f) die flüssige Phase gemäß (e) in eine der Stufen vor der Eisen-Fällung der Zink-Elektrolyse geleitet wird.

Als Rückstand kommt in erster Linie der Rückstand aus dem eigenen Verfahren der elektrolytischen Zink-Gewinnung in Frage, der nach der Neutralisation der Lösung aus der heißen sauren Laugung vor der Fällung des Eisens anfällt. Es können aber auch Rückstände von fremden hydrometallurgischen Verfahren der Zink-Gewinnung eingesetzt werden. Der Rückstand aus dem Zinkelektrolyse-Verfahren enthält ausgefällte Elemente, wie z.B. Cu, In, Ge, Ga und evtl. ungelöste Elemente, wie z.B. Cu, Ag, Pb, Zn sowie $Al_2O_3$ und $SiO_2$ und anhaftende Sulfatlösung. Der Rückstand wird vor der Nachbehandlung zweckmäßigerweise mittels Filtrationseinrichtungen teilweise entwässert. Die in die saure Laugung der Stufe (a) eingesetzte Zellensäure kann durch Betriebswässer so eingestellt werden, daß am Ende der kontinuierlichen Laugung die erforderliche Säurekonzentration vorliegt. Diese Säurekonzentration ergibt ein gutes Absetzverhalten im nachgeschalteten Eindicker zur Fest-/Flüssig-Trennung. Der eingedickte Feststoff enthält die unlöslichen Bestandteile, wie z.B. Pb, Ag, und bei der schwachen Säurekonzentration schwer lösliche Bestandteile, wie z.B. Zinkferrit und teilweise Cu. Er wird in die Stufe der heißen sauren Laugung zurückgeführt. Dort werden die löslichen Bestandteile weitgehend in Lösung gebracht und Pb und Ag in einem unlöslichen Rückstand angereichert und ausgetragen. Die Lösung aus der Fest-/Flüssig-Trennung nach der sauren Laugung wird mit feinkörnigem, metallischem Eisen versetzt. Die Wahl des Eisenträgers bestimmt den Typ des jeweils zweckmäßigsten Reaktors, z.B. Behälter mit Rührwerk, Vibrations- oder Schwingreaktor, Zementationstrommel oder Zementationstrichter. Durch den Zusatz von metallischem Eisen gelingt es, das Cu im sauren Medium ohne Anhebung des pH-Wertes und damit verbundener Fällung einiger Metallhydroxide zu zementieren. Auch wird die Zementation von Cd weitgehend unterdrückt. Weiter-

hin wird das $Fe^{3+}$ zu $Fe^{2+}$ reduziert und damit der störende Einfluß des $Fe^{3+}$ auf die nachfolgenden Schritte verhindert. Als metallisches Eisen kann beispielsweise und vorzugsweise aus Kosten- wie metallurgischen Gründen das Unterkorn der Herstellung von Eisenschwamm oder die Magnetfraktion von eisenhaltigen Schlacken verwendet werden. Das Cu-Zementat wird zweckmäßigerweise in Filterpressen abfiltriert, gewaschen und entwässert und dann zur Weiterverarbeitung abgegeben. Die entkupferte Lösung enthält nunmehr neben Zn und $Fe^{2+}$ in Abhängigkeit von Höhe des Eintrages die Wertmetalle In, Ge, Ga in stark angereicherter Konzentration.

Eine vorzugsweise Ausgestaltung besteht darin, daß mindestens aus einem Teilstrom der Lösung gemäß (e) vor dem Einsatz in (f) Aluminium ausgefällt wird. Das ausgefällte Aluminium wird abgetrennt und dadurch eine Anreicherung von Aluminium in der Zink-Elektrolyse vermieden.

Eine vorzugsweise Ausgestaltung besteht darin, daß die Ausfällung des Aluminiums durch Neutralisation auf einen pH-Wert von 4,0 bis 5,0 erfolgt, der ausgefallene Feststoff abfiltriert wird und die erhaltene Lösung in (f) geleitet wird. Dadurch fällt eine geringe Rückstandsmenge an, in der der Aluminiumgehalt weitgehend enthalten ist. Die Neutralisation der Lösung kann mit Röstgut, Zinkoxid oder Kalk erfolgen. Der Rückstand enthält im Falle der Neutralisation mit Röstgut auch als Wertmetalle Blei und Silber und kann z.B. in einer Bleihütte verarbeitet werden. Er kann jedoch auch deponiert werden. Die Art der Neutralisation ist abhängig von der Art der Weiterverarbeitung und der damit verbundenen Rückgewinnung der Wertmetalle. Der Feststoff wird durch Filtrieren oder Zentrifugieren abgetrennt, gewaschen und für die Weiterverarbeitung ausreichend entwässert. Die Lösung wird in eine der Stufen vor der Eisenfällung der Zink-Elektrolyse, vorzugsweise direkt in die Eisenfällung, geleitet.

Eine vorzugsweise Ausgestaltung besteht darin, daß die Neutralisation bei einer Temperatur von 70 bis 95° C und auf einen pH-Wert von 4,0 bis 4,5 erfolgt. Dadurch wird eine sehr gute Fällung erreicht und der Feststoff läßt sich gut filtrieren oder abzentrifugieren.

Eine vorzugsweise Ausgestaltung besteht darin, daß die Ausfällung des Aluminiums durch Zugabe von Pb-Ag-Rückstand und Behandlung im Autoklaven bei Temperaturen über 150° C, vorzugsweise 19,0 % Pb, 0,17 % Ag,19,0 % Pb, 0,17 % Ag,180 bis 210° C, erfolgt, die Suspension in (f) geleitet wird, und das ausgefällte Aluminium mit dem Pb-Ag-Rückstand der Zink-Elektrolyse abgetrennt wird. Dadurch wird das Aluminium in den Blei-Silber-Rückstand der Zinkelektrolyse gebracht, wodurch kein zusätzlicher Rückstand anfällt. Der Blei-Silber-Rückstand fällt außerdem in konzentrierter Form an. Anstelle von Blei-Silber-Rückstand können auch Bleisulfat oder Erdalkalisulfate zur Ausfällung des Aluminiums zugegeben werden. Diese Stoffe müssen jedoch zugekauft werden und im Falle von Erdalkalisulfaten fallen artfremde Materialien im Rückstand an, die weiterverarbeitet oder deponiert werden müssen.

Eine vorzugsweise Ausgestaltung besteht darin, daß die Ausfällung des Aluminiums durch Zugabe von Pb-Ag-Rückstand und Behandlung im Autoklaven bei Temperaturen über 150° C, vorzugsweise 180 bis 210° C, erfolgt, das ausgefällte Aluminium mit dem zugegebenen Pb-Ag-Ruckstand abgetrennt wird, und die erhaltene Lösung in (f) geleitet wird. Diese Arbeitsweise hat den Vorteil, daß die Suspension keine langen Wege geleitet werden muß und daß das Aluminium in einer relativ geringen Feststoffmenge anfällt.

Eine vorzugsweise Ausgestaltung besteht darin, daß die Ausfällung des Aluminiums durch Zugabe von organischen Stoffen, wie Melasse, und Behandlung im Autoklaven bei Temperaturen über 150° C. vorzugsweise 180 bis 210° C, erfolgt, der ausgefällte Feststoff abgetrennt wird, und die erhaltene Lösung in (f) geleitet wird. Bei dieser Arbeitsweise fällt das Aluminium zwar zusammen mit artfremden Materialien an, kann aber gut deponiert oder auch verarbeitet werden.

Eine vorzugsweise Ausgestaltung besteht darin, daß die freie Säurekonzentration in (a) 30 bis 50 g/l und die Temperatur 70 bis 95° C beträgt. Dadurch ergibt sich ein besonders gutes Absetzverhalten.

Eine vorzugsweise Ausgestaltung besteht darin, daß der Feststoffgehalt in (a) 60 bis 150 g/l beträgt. Dadurch werden gute Laugungs- und Absetzverhältnisse geschaffen.

Eine vorzugsweise Ausgestaltung besteht darin, daß die Abtrennung des ungelösten Anteils aus der Suspension gemäß (b) in Anwesenheit von Polyalkoholen oder Gelatine zur Ausfällung von $SiO_2$ erfolgt. Dadurch wird das $SiO_2$ weitestgehend in den Rückstand gebracht und fällt in gut filtrierbarer Form an. Der Zusatz kann auch bei der heißen sauren Laugung der Zinkelektrolyse erfolgen, wobei das $SiO_2$ dann in den Blei-Silber-Rückstand geht. Jedoch ist hierbei ein größerer Zusatz an Reagenzien erforderlich.

Eine vorzugsweise Ausgestaltung besteht darin, daß das gemäß (d) ausgefällte und gemäß (e) abgetrennte Kupferzementat wieder in den Fälltank rezirkuliert wird, bis eine Feststoffkonzentration von 100 bis 300 g/l erreicht ist, und daß eine Temperatur von 70 bis 95° C eingestellt wird. Dadurch läßt sich der Festsoff sehr gut abfiltrieren, waschen und entwässern.

Eine vorzugsweise Ausgestaltung besteht darin, daß nach der Kupferabtrennung aus der Lösung gemäß (e) vor Stufe (f) Germanium, Indium, Gallium abgetrennt werden. Die Gewinnung der Metalle kann durch Flüssig-Flüssig-Extraktion, Ionenaustausch oder Fällung mit geeigneten Reagenzien erfolgen. Wenn eine Aluminiumfällung erfolgt, wird die Abtrennung von Germanium, Indium, Gallium vorher durchgeführt. Dadurch fallen diese Metalle bzw. deren Verbindungen in sehr konzentrierter Form an.

Eine vorzugsweise Ausgestaltung besteht darin, daß aus dem ausgefälltes Aluminium enthaltenden Rückstand mindestens eines der Elemente Indium, Germanium oder Gallium gewonnen wird. Die Gewinnung erfolgt durch eine zusätzliche Laugungsstufe.

Eine vorzugsweise Ausgestaltung besteht darin, daß der in (a) eingesetzte Laugungsrückstand in der Zink-Elektrolyse gebildet wird durch heiße saure Laugung des Rückstandes der neutralen Laugung des gerösteten Zinkkonzentrates, Abtrennung des ungelösten Anteils als Blei-Silber-Rückstand, vorzugsweise unter Zusatz von Gelatine oder Polyalkohol, reduzierende Laugung der Lösung unter Zusatz von Zinkblende, Abtrennung der ungelösten Stoffe und Rückführung in die Röstung, Vorneutralisation der Lösung durch Zugabe von Röstgut oder Laugungsrückstand, Neutralisation durch Zugabe von Röstgut, Abtrennung des Laugungsrückstandes, Fällung des Eisens in der Lösung und Rückführung der Lösung in die neutrale Laugung. Durch diese Arbeitsweise fallen die Wertstoffe in einer sehr kleinen Rückstandsmenge an, wodurch der Aufwand für die Aufarbeitung des Rückstandes sehr gering gehalten werden kann. Die bei der Aufarbeitung anfallende Lösung sowie der nach der sauren Laugung anfallende Feststoff können in sehr günstiger Weise in das Verfahren der elektrolytischen Zink-Gewinnung zurückgeführt werden und es fällt außer verwertbaren Rückständen im ganzen Verfahren kein Rückstand an, der deponiert werden muß. Der Zusatz von Gelatine oder Polyalkohol ergibt eine bessere Abtrennung des $SiO_2$.

Eine vorzugsweise Ausgestaltung besteht darin, daß die Neutralisation nach der Vorneutralisation auf einen pH-Wert von 4,0 bis 5,0 erfolgt. Dadurch werden günstige Bedingungen für die Ausfällung des Rückstandes und seine Abtrennung von der Lösung geschaffen, die besonders gut bei einem pH-Wert von 4,0 bis 4,5 sind.

Eine vorzugsweise Ausgestaltung besteht darin, daß die Eisenfällung in Form von Hämatit erfolgt. Dadurch wird das Eisen in einer Form ausgefällt, die einen hohen Eisengehalt hat, wenig Zink enthält und damit für eine Weiterverarbeitung sehr günstig ist.

Eine vorzugsweise Ausgestaltung besteht darin, daß der abgetrennte ungelöste Anteil der heißen sauren Laugung in einer superheißen sauren Laugung mit Zellensäure bei Temperaturen von 90 bis 130°C, vorzugsweise 95 bis 110°C, und 130 bis 160 g/l, vorzugsweise 140 bis 150 g/l, Schwefelsäure unter Einleitung von $SO_2$ gelaugt wird, der dabei anfallende ungelöste Feststoff abgetrennt und als Blei-Silber-Rückstand abgeführt wird, und die Lösung in die heiße saure Laugung zurückgeleitet wird. Dadurch werden Eisen und andere Elemente besser gelöst und der Blei-Silber-Rückstand ist ärmer an Eisen und diesen Elementen.

Die Erfindung wird anhand von Fließschemen und eines Ausführungsbeispieles näher erläutert.

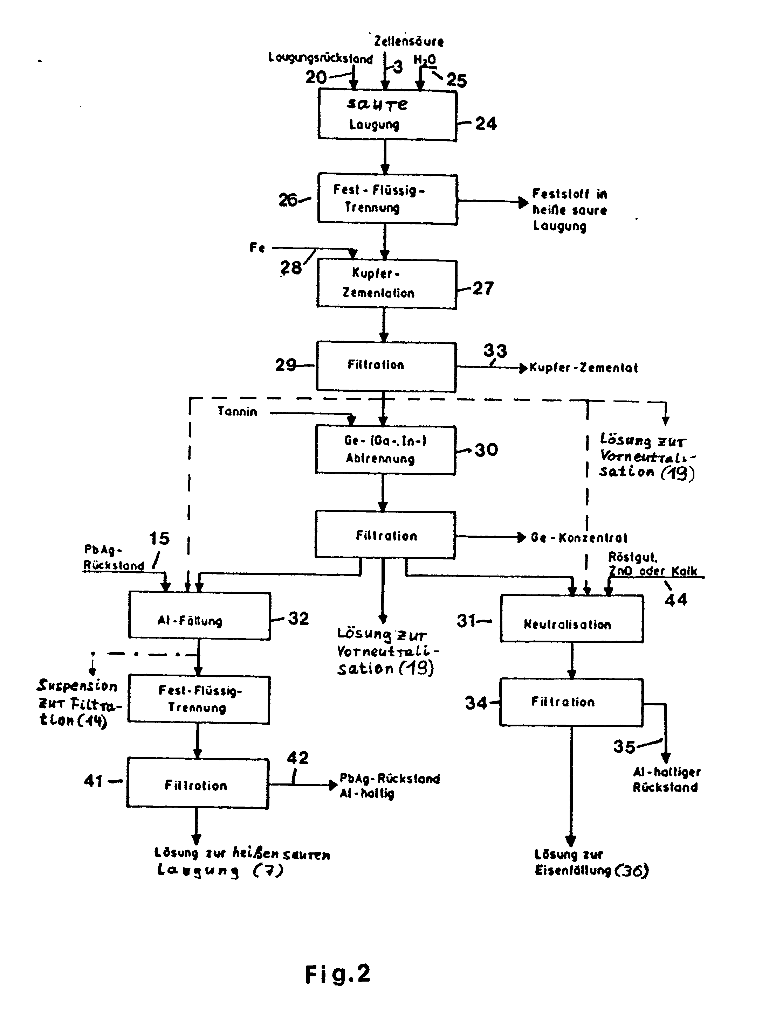

Fig. 1     ist ein Fließschema einer Zinkelektrolyse, in dem die erfindungsgemäße Aufarbeitung des Rückstandes nur schematisch als saure Laugung dargestellt ist.

Fig. 2     ist ein Fließschema dieser Aufarbeitung des Rückstandes mit Einzelheiten.

In die neutrale Laugung (1) werden Röstgut (2), Zellensäure (3) und Lösung (4) aus der Eisenfällung eingesetzt. Danach erfolgt eine Fest-,Flüssig-Trennung (5). Der Überlauf wird in die Laugenreinigung (6) und der Laugungsrückstand in die heiße saure Laugung (7) geleitet. In der Laugenreinigung (6) wird Zinkstaub (8) zugesetzt. Die gereinigte Zinksulfatlösung wird in die Elektrolyse (9) geleitet und das Kupfer-Zementat (10) wird der Weiterverarbeitung zugeführt. Nach der heißen, sauren Laugung (7) erfolgt eine Fest-/Flüssig-Trennung (11). Der Überlauf gelangt in die reduzierende Laugung (12). Der Feststoff wird in die superheiße saure Laugung (13) geleitet, in der die Laugung unter Zusatz von Zellensäure (3) und $SO_2$ (43) erfolgt. Nach einer Filtration (14) wird der Blei-Silber-Rückstand (15) der Weiterverarbeitung zugeführt. Die reduzierende Laugung (12) erfolgt unter Zusatz von Zinkblende (16). Danach erfolgt eine Fest-/Flüssig-Trennung (17). Nach anschließender Filtration (18) wird der Schwefel-Rückstand in die Röstung zurückgeführt. Der Überlauf aus der Fest-/Flüssig-Trennung (17) gelangt in die Vorneutralisation (19), in die Röstgut (22) oder Rückstand (20) der Neutralisation (21) eingesetzt wird. Die Suspension gelangt in die Neutralisation (21). In die Neutralisation (21) wird Röstgut (22) eingesetzt. Nach anschließender Filtration (23) wird der Rückstand (20) zu einem Teil in die saure Laugung (24) eingesetzt, zu einem anderen Teil in die Vorneutralisation (19). Das Filtrat wird in die Eisenfällung (36) eingesetzt.

In die saure Laugung (24) werden Zellensäure (3) und Wasser (25) eingesetzt. Nach einer Fest-/Flüssig-Trennung (26) gelangt der Überlauf in die Kupferzementation (27), und der Feststoff wird in die heiße, saure Laugung (7) zurückgeführt. In der Kupferzementation (27) wird feinkörniges metallisches Eisen (28) zugesetzt.

In der Filtration (29) wird das Kupfer-Zementat (33) abfiltriert und der Weiterverarbeitung zugeführt. Das Filtrat wird entweder direkt weiterverarbeitet (gestrichelte Linien) oder vorher in eine Gewinnung für Ge, Ga, In (30) geleitet. In beiden Fällen kann die Weiterverarbeitung des Filtrates auf mehrere Weisen erfolgen.

Die Lösung kann ganz oder teilweise zur Vorneutralisation (l9) geleitet werden.

Die Lösung kann ganz oder teilweise in die Neutralisation (3l) geleitet werden, wo Röstgut, ZnO oder Kalk (44) eingesetzt werden. Nach der Filtration (34) wird der Al-haltige Rückstand (35) der Weiterverarbeitung oder Deponie zugeführt und das Filtrat wird zur Eisenfällung (36) geleitet.

Die Lösung kann ganz oder teilweise in die Al-Fällung (32) geleitet werden, wo ein Teil des Pb-Ag-Rückstandes (l5) zugegeben wird. Nach anschließender Fest-/Flüssig-Trennung und Filtration (4l) wird das ausgefällte Aluminium mit dem Pb-Ag-Rückstand (42) der Weiterverarbeitung zugeführt. Das Filtrat wird zur heißen sauren Laugung (7) geleitet. Nach der Zugabe des Pb-Ag-Rückstandes (l5) in der Al-Fällung (32) kann die erhaltene Suspension (strich-punktierte Linie) in die Filtration (l4) der Zink-Elektrolyse geleitet werden, wo der Al-haltige Pb-Ag-Rückstand zusammen mit der Hauptmenge des Pb-Ag-Rückstandes (l5) abgetrennt wird.

In die Eisenfällung (36) der Zink-Elektrolyse werden Sauerstoff und Dampf (37) eingeleitet. Nach einer Fest-/Flüssig-Trennung (38) wird der Überlauf in die neutrale Laugung (l) geleitet, der Feststoff in eine Filtration (39) geführt und der Hämatit-Rückstand (40) der Weiterverarbeitung zugeführt.

Ausführungsbeispiel

Abfiltrierter Feststoff aus der Neutralisation der Zinkelektrolyse wurde in saurer Laugung bei 85°C mit Zellensäure l h lang unter Rühren gelaugt. Die Zellensäuremenge wurde so bemessen, daß sich eine Säurekonzentration von etwa 30 g/l einstellte. Vor der Filtration wurden 0,l g eines Polyalkohols pro Liter Suspension zugesetzt. Der Laugungsrückstand wurde abfiltriert. Das Filtrat wurde mit feinkörnigem metallischem Eisen versetzt, um das Kupfer auszufällen.

Das Kupferzementat wurde abfiltriert und das Filtrat in der Neutralisation bei 80°C unter Rühren mit so viel Röstgut versetzt, daß sich ein pH-Wert von 5 einstellte. Der Rückstand wurde abfiltriert.

Feststoff der Neutralisation der Zinkelektrolyse:

30,2% Zn, 20,5 % Fe, 2,6 % Pb, 3,0 % Cu, 3,2

% SiO$_2$, 3,0 % Al$_2$O$_3$

Laugungsrückstand

l6,5 % Zn, 30,3 % Fe, 8,2 % Pb, 0,9 % Cu, 9,8 % SiO$_2$, 2,5 % Al$_2$O$_3$

Filtrat der Laugung:

95 g/l Zn, l0,5 g/l Fe$^{++}$, 6,8 g/l Fe$^{++}$, 5,6 g/l Cu, 0,4 g/l SiO$_2$, 4,5 g/l Al$_2$O$_3$, 34 g/l H$_2$SO$_4$

Kupferzementat:

5l,5 % Cu, 4,4 % Fe, 3,6 % Zn, 5,6 % SiO$_2$, 2,0 % Al$_2$O$_3$

Filtrat der Kupferfällung:

93 g/l Zn, l8,5 g/l Fe$^{++}$, 0,3 g/l Fe$^{+++}$, 0,6 g/l Cu, 0,l g/l SiO$_2$, 4,5 g/l Al$_2$O$_3$, 30 g/l H$_2$SO$_4$

Neutralisationsrückstand:

28,5 % Zn, l6,3 % Fe, 2,5 % Pb, l,9 % Cu, l,7 % SiO$_2$, 6,5 % Al$_2$O$_3$

Filtrat der Neutralisation:

ll6 g/l Zn, 20 g/l Fe$^{++}$, 0,l g/l Fe$^{+++}$, 0,2 g/l Cu, 0,l g/l SiO$_2$, 0,3 g/l Al$_2$O$_3$

Das Filtrat der Kupferzementation wurde mit einer wäßrigen Aufschlämmung von Calciumhydroxid versetzt, bis sich ein pH-Wert von 4,5 einstellte. Der ausgefällte verunreinigte Gips wurde abfiltriert.

Filtrat der Kupferfällung:

l03 g/l Zn, 2l,5 g/l Fe$^{++}$, 0,2 g/l Fe$^{+++}$, 0,l g/l Cu, 0,2 g/l SiO$_2$, 3,9 g/l Al$_2$O$_3$

Gips:

3,6 % Zn, 0,6 % Fe, 0,l % Cu, 4,0 % Al$_2$O$_3$

Filtrat der Gipsfällung:

l05 g/l Zn, 2l g/l Fe$^{++}$, 0,l g/l Fe$^{+++}$, 0,l g/l Cu, 0,l g/l SiO$_2$, 0,2 g/l Al$_2$O$_3$

2,5 l Filtrat der Kupferzementation wurden in einem Autoklaven mit l75 g filterfeuchtem Blei-Silber-Rückstand versetzt. Unter Rühren wurde die Suspension auf 200°C gebracht und l h bei dieser Temperatur gehalten. Danach wurde durch Abkühlen entspannt und die Suspension filtriert. Der abfiltrierte Feststoff enthielt fast das gesamte vorher in Lösung befindliche Aluminium.

Filtrat der Kupferfällung:

77 g/l Zn, 20,3 g/l Fe + +, 0,6 g/l Fe + + +, 0,l g/l Cu, 7,6 g/l $Al_2O_3$, 34 g/l $H_2SO_4$

Blei-Silber-Rückstand:

22,5 % Pb, 0,l9 % Ag, 9,3 % Fe, 2,5 % Zn, 2,0 % $Al_2O_3$, l3,l % $SiO_2$

Filtrat der Aluminium-Fällung:

73 g/l Zn, l9,8 g/l Fe + +, 0,4 g/l Fe + + +, 0,l g/l Cu, 0,7 g/l $Al_2O_3$, 38 g/l $H_2SO_4$

Rückstand der Aluminiumfällung:

l9,0 % Pb, 0,l7 % Ag, 6,l % Fe, l0,7 % $Al_2O_3$, 2,3 % Zn

Die Vorteile der Erfindung bestehen darin, daß Rückstände aus der Laugung von Zink enthaltenden Stoffen mit geringem Aufwand so aufgearbeitet werden können daß entweder kein nicht-weiterverwendbarer Rückstand oder nur ein sehr geringer Rückstand anfällt, und daß die Wertstoffe des Rückstandes aus kleinen Materialmengen gewonnen werden können. Eine Zinkelektrolyse kann so ohne Anfall von nicht-verwertbaren Rückständen durchgeführt werden.

**Patentansprüche**

1. Verfahren zur Aufarbeitung von Rückständen aus der hydrometallurgischen Zink-Gewinnung in Verbindung mit einer Zink-Elektrolyse, dadurch gekennzeichnet, daß
   a) der Rückstand mit Zellensäure aus der Zinkelektrolyse bei einer Temperatur von 50 bis 100 °C so gelaugt wird, daß am Ende der Laugung eine freie Säurekonzentration von 10 bis 100 g/l vorliegt,
   b) der ungelöste Anteil aus der Suspension abgetrennt wird,
   c) der abgetrennte Anteil in die heiße saure Laugung der Zink-Elektrolyse geleitet wird,
   d) in der Lösung gemäß (b) Kupfer durch Zugabe von feinkörnigem, metallischem Eisen ausgefällt wird,
   e) das ausgefällte Kupfer abgetrennt wird,
   f) die flüssige Phase gemäß (e) in eine der Stufen vor der Eisen-Fällung der Zink-Elektrolyse geleitet wird.

2. Verfahren nach Anspruch 1, dadurch gekennzeichnet, daß mindestens aus einem Teilstrom der Lösung gemäß (e) vor dem Einsatz in (f) Aluminium ausgefällt wird.

3. Verfahren nach Anspruch 2, dadurch gekennzeichnet, daß, die Ausfällung des Aluminiums durch Neutralisation auf einen pH-Wert von 4,0 bis 5,0 erfolgt, der ausgefallene Feststoff abfiltriert wird und die erhaltene Lösung in (f) geleitet wird.

4. Verfahren nach Anspruch 3, dadurch gekennzeichnet, daß die Neutralisation bei einer Temperatur von 70 bis 95 °C und auf einen pH-Wert von 4,0 bis 4,5 erfolgt.

5. Verfahren nach Anspruch 2, dadurch gekennzeichnet, daß die Ausfällung des Aluminiums durch Zugabe von Pb-Ag-Rückstand und Behandlung im Autoklaven bei Temperaturen über l50 °C, vorzugsweise l80 bis 2l0 °C, erfolgt, die Suspension in (f) geleitet wird, und das ausgefällte Aluminium mit dem Pb-Ag-Rückstand der Zink-Elektrolyse abgetrennt wird.

6. Verfahren nach Anspruch 2, dadurch gekennzeichnet, daß die Ausfällung des Aluminiums durch Zugabe von Pb-Ag-Rückstand und Behandlung im Autoklaven bei Temperaturen über l50 °C, vorzugsweise l80 bis 2l0 °C, erfolgt, das ausgefällte Aluminium mit dem zugegebenen Ag-Pb-Rückstand abgetrennt wird, und die erhaltene Lösung in (f) geleitet wird.

7. Verfahren nach Anspruch l, dadurch gekennzeichnet, daß die Ausfällung des Aluminiums durch Zugabe von organischen Stoffen, wie Melasse, und Behandlung im Autoklaven bei Temperaturen über l50 °C. vorzugsweise l80 bis 2l0 °C, erfolgt, der ausgefällte Feststoff abgetrennt wird, und die erhaltene Lösung in (f) geleitet wird.

8. Verfahren nach einem der Ansprüche l bis 7, dadurch gekennzeichnet, daß die freie Säurekonzentration in (a) 30 bis 50 g/l und die Temperatur 70 bis 95 °C beträgt.

9. Verfahren nach einem der Ansprüche l bis 8, dadurch gekennzeichnet, daß der Feststoffgehalt in (a) 60 bis l50 g/l beträgt.

10. Verfahren nach einem der Ansprüche l bis 9, dadurch gekennzeichnet, daß die Abtrennung des ungelösten Anteils aus der Suspension gemäß (b) in Anwesenheit von Polyalkoholen oder Gelatine zur Ausfällung von $SiO_2$ erfolgt.

11. Verfahren nach einem der Ansprüche l bis l0, dadurch gekennzeichnet, daß das gemäß (d) ausgefällte und gemäß (e) abgetrennte Kupferzementat wieder in den Fälltank rezirkuliert wird, bis eine Feststoffkonzentration von 100 bis 300 g/l erreicht ist, und daß eine Temperatur von 70 bis 95° C eingestellt wird.

12. Verfahren nach einem der Ansprüche I bis II, dadurch gekennzeichnet, daß nach der Kupferabtrennung aus der Lösung gemäß (e) vor Stufe (f) Germanium, Indium, Gallium abgetrennt werden.

13. Verfahren nach einem der Ansprüche 2 bis 7, dadurch gekennzeichnet, daß aus dem ausgefälltes Aluminium enthaltenden Rückstand mindestens eines der Elemente Indium, Germanium oder Gallium gewonnen wird.

14. Verfahren nach einem der Ansprüche 1 bis 12, dadurch gekennzeichnet, daß der in (a) eingesetzte Laugungsrückstand in der Zink-Elektrolyse gebildet wird durch heiße saure Laugung des Rückstandes der neutralen Laugung des gerösteten Zinkkonzentrates bei einer Temperatur zwischen 70° C und der Siedepunkt der Lösung, Abtrennung des ungelösten Anteils als Blei-Silber-Rückstand, vorzugsweise unter Zusatz von Gelatine oder Polyalkohol, reduzierende Laugung der Lösung unter Zusatz von Zinkblende, Abtrennung der ungelösten Stoffe und Rückführung in die Röstung, Vorneutralisation der Lösung durch Zugabe von Röstgut oder Laugungsrückstand, Neutralisation durch Zugabe von Röstgut, Abtrennung des Laugungsrückstandes, Fällung des Eisens in der Lösung und Rückführung der Lösung in die neutrale Laugung.

15. Verfahren nach Anspruch 14, dadurch gekennzeichnet, daß die Neutralisation nach der Vorneutralisation auf einen pH-Wert von 4,0 bis 5,0 erfolgt.

16. Verfahren nach Anspruch 14 oder Anspruch 15, dadurch gekennzeichnet, daß die Eisenfällung in Form von Hämatit erfolgt.

17. Verfahren nach einem der Ansprüche 14 bis 16, dadurch gekennzeichnet, daß der abgetrennte ungelöste Anteil der heißen sauren Laugung in einer superheißen sauren Laugung mit Zellensäure bei Temperaturen von 90 bis 130° C, vorzugsweise 95 bis 110° C, und 130 bis 160 g/l, vorzugsweise 140 bis 150 g/l, Schwefelsäure unter Einleitung von SO$_2$ gelaugt wird, der dabei anfallende ungelöste Feststoff abgetrennt und als Blei-Silber-Rückstand abgeführt wird, und die Lösung in die heiße saure Laugung zurückgeleitet wird.

**Claims**

1. A process of treating residues from the hydrometallurgical production of zinc in combination with an zinc electrolysis, characterized in that

   a) the residue is leached with cell acid from the zinc electrolysis at a temperature from 50 to 100 °C in such a manner that the concentration of free acid is between 10 and 100 g/l at the end of the leaching,

   b) the undissolved matter is separated from the suspension;

   c) the separated matter is fed to the hot acid leaching in the zinc electrolysis,

   d) copper is precipitated by an addition of fine-grained iron metal to the solution obtained in step b),

   e) the precipitated copper is separated, and

   f) the liquid phase obtained in step (e) is fed to one of the stages which precede the precipitation of iron in the zinc electrolysis.

2. A process according to claim 1, characterized in that aluminum is precipitated from a partial stream or from the stream of the solution obtained in step (e) before said partial stream or stream is fed to step (f).

3. A process according to claim 2, characterized in that the aluminum is precipitated by a neutralization to a pH value from 4.0 to 5.0, the precipitated solids are filtered off and the resulting solution is fed to step (f).

4. A process according to claim 3, characterized in that the neutralization is effected at a temperature from 70 to 95 °C and to a pH value from 4.0 to 4.5.

5. A process according to claim 2, characterized in that the aluminum is precipitated by an addition of Pb-Ag residue and a treatment in an autoclave at temperatures above 150° C, preferably from 180 to 210 °C, the resulting suspension is fed to step (f) and the precipitated aluminum is separated together with the Pb-Ag residue formed in the zinc electrolysis.

6. A process according to claim 2, characterized in that the aluminum is precipitated by an addition of Pb-Ag residue and a treatment in an autoclave at temperatures above 150° C, preferably from 180 to 210 °C, the precipitated aluminum is separated together with the Ag-Pb residue which has been added, and the resulting solution is fed to step (f).

7. A process according to claim 1, characterized in that the aluminum is precipitated by an addition of organic substances, such as molasses, and a treatment in an autoclave at temperatures above 150°C, preferably from 180 to 210 °C, the precipitated solids are separated and the resulting solution is fed to step (f).

8. A process according to any of claims 1 to 7, characterized in that step (a) is carried out at a temperature from 70 to 95 °C and results in a final concentration of free acid from 30 to 50 g/l.

9. A process according to any of claims 1 to 8, characterized in that the solids content in step (a) is from 60 to 150 g/l.

10. A process according to any of claims 1 to 9, characterized in that the undissolved matter is separated from the suspension formed in step (b) in the presence of polyalcohols or gelatin to precipitate $SiO_2$.

11. A process according to any of claims 1 to 10, characterized in that the cement copper which has been precipitated in step (d) and separated in step (e) is recycled to the precipitation tank until a solids concentration from 100 to 300 g/l has been reached, and the temperature is adjusted in the range from 70 to 95°C.

12. A process according to any of claims 1 to 11, characterized in that the separation of copper from the solution obtained in step (e) is succeeded by a separation of germanium, indium and gallium before step (f).

13. A process according to any of claims 2 to 7, characterized in that at least one of the elements indium, germanium or gallium is recovered from the residue which contains precipitated aluminum.

14. A process according to any of claims 1 to 12, characterized in that the leach residue fed to step (a) is obtained in the zinc electrolysis by a hot acid leaching of the residue left after the neutral leaching of the roasted zinc concentrate, which hot acid leaching is effected at a temperature from 70°C and the boiling point of the solution, a separation of the undissolved matter consisting of a lead-silver residue, preferably with an addition of gelatin or polyalcohol, a reducing leaching of the solution with an addition of zinc blend, a separation of the undissolved matter, a recycling of said undissolved matter to the roasting step, a preneutralization of the solution by an addition of calcine or leach residue, a neutralization by an addition of calcine, a separation of the leach residue, a precipitation of the iron contained in the solution and a recycling of the solution to the neutral leaching step.

15. A process according to claim 14, characterized in that the neutralization is effected after a preneutralization to a pH value from 4.0 to 5.0.

16. A process according to claim 14 or 15, characterized in that iron is precipitated as hematite.

17. A process according to any of claims 14 to 16, characterized in that the undissolved matter which has been separated after the hot acid leaching is leached in a superhot acid leaching step at temperatures from 90 to 130 °C, preferably from 95 to 110 °C, with cell acid which contains sulfuric acid in a concentration from 130 to 160 g/l, preferably 140 to 150 g/l, and with the introduction of $SO_2$, the undissolved solids thus obtained are separated and removed as a lead-silver residue, and the solution is recycled to the hot acid leaching step.

## Revendications

1. Procédé de traitement de résidus de l'hydrométallurgie du zinc, en liaison avec une électrolyse du zinc, caractérisé en ce qu'il consiste

    a) à lixivier le résidu par de l'acide de cellules provenant de l'électrolyse du zinc à une température de 50 à 100°C, de manière à obtenir à la fin de la lixiviation une concentration en acide libre de 10 à 100 g/l,

    b) à séparer la partie non dissoute de la suspension,

    c) à envoyer la partie séparée à la lixiviation acide chaude de l'électrolyse du zinc,

    d) à précipiter, dans la solution suivant (b), du cuivre par addition de fer métallique à grains fins,

    e) à séparer le cuivre précipité,

    f) à envoyer la phase liquide suivant (e) à l'un des stades de l'électrolyse du zinc, qui se trouve en amont de la précipitation du fer.

2. Procédé suivant la revendication 1, caractérisé en ce qu'il consiste à précipiter de l'aluminium dans au moins un courant partiel de la solution suivant (e) avant son utilisation dans (f).

3. Procédé suivant la revendication 2, caractérisé en ce qu'il consiste à effectuer la précipitation de l'aluminium par neutralisation à un pH de 4,0 à 5,0, à séparer la matière solide précipitée par filtration et à envoyer la solution obtenue à (f).

4. Procédé suivant la revendication 3, caractérisé en ce qu'il consiste à effectuer la neutralisation à une température de 70 à 95°C et à un pH de 4,0 à 4,5.

5. Procédé suivant la revendication 2, caractérisé en ce qu'il consiste à effectuer la précipitation de l'aluminium par addition de résidu de Pb-Ag et par traitement en autoclave à des températures supérieures à 150°C et de préférence de 180 à 210°C, à envoyer la suspension à (f) et à séparer l'aluminium précipité avec le résidu de Pb-Ag de l'électrolyse du zinc.

6. Procédé suivant la revendication 2, caractérisé en ce qu'il consiste à effectuer la précipitation de l'aluminium par addition de résidu de Pb-Ag et par traitement à l'autoclave à des températures supérieures à 150°C et, de préférence, comprises entre 180 et 210°C, à séparer l'aluminium précipité avec le résidu de Ag-Pb qui a été ajouté et à envoyer la solution obtenue à (f).

7. Procédé suivant la revendication 1, caractérisé en ce qu'il consiste à effectuer la précipitation de l'aluminium par addition de substances organiques, comme de la mélasse, et par traitement à l'autoclave à des températures supérieures à 150°C et, de préférence, comprises entre 180 à 210°C, à séparer la matière solide précipitée et à envoyer la solution obtenue à (f).

8. Procédé suivant l'une des revendications 1 à 7, caractérisé en ce que la concentration en acide libre en (a) est comprise entre 30 et 50 g/l et la température entre 70 et 95°C.

9. Procédé suivant l'une des revendications 1 à 8, caractérisé en ce que la teneur en matière solide en (a) est comprise entre 60 et 150 g/l.

10. Procédé suivant l'une des revendications 1 à 9, caractérisé en ce qu'il consiste à effectuer la séparation de la partie non dissoute de la suspension suivant (b) en présence de polyalcool ou de gélatine, pour précipiter le SiO₂.

11. Procédé suivant l'une des revendications 1 à 10, caractérisé en ce qu'il consiste à retourner à la cuve de précipitation le cément de cuivre précipité suivant (d) et séparé suivant (e), jusqu'à obtenir une concentration en matière solide de 100 à 300 g/l et à régler à une température de 70 à 95°C.

12. Procédé suivant l'une des revendications 1 à 11, caractérisé en ce qu'il consiste à séparer le germanium, l'indium et le gallium après la séparation du cuivre dans la solution suivant (e) et avant le stade (f).

13. Procédé suivant l'une des revendications 2 à 7, caractérisé en ce qu'il consiste à récupérer dans le résidu contenant de l'aluminium précipité au moins l'un des éléments que sont l'indium, le germanium ou le gallium.

14. Procédé suivant l'une des revendications 1 à 12, caractérisé en ce qu'il consiste à former dans l'électrolyse du Zinc, le résidu de lixiviation utilisé dans (a), par lixiviation acide chaude du résidu de la lixiviation neutre du concentré de zinc grillé, à une température comprise entre 70°C et le point d'ébullition de la solution, par séparation de la partie non dissoute sous forme de résidus de plomb et d'argent, de préférence avec addition de gélatine ou de polyalcool, par lixiviation réductrice de la solution par addition de blende de Zinc, par séparation des matières non dissoutes et par leur renvoi au grillage, par préneutralisation de la solution par addition du produit de grillage ou du résidu de lixiviation, par neutralisation par addition du produit de grillage, par séparation du résidu de lixiviation, par précipitation du fer de la solution et par renvoi de la solution à la lixiviation neutre.

15. Procédé suivant la revendication 14, caractérisé en ce qu'il consiste à effectuer la neutralisation, après la préneutralisation, à un pH de 4,0 à 5,0.

16. Procédé suivant la revendication 14 ou la revendication 15, caractérisé en ce qu'il consiste à effectuer la précipitation du fer sous la forme d'hématite.

17. Procédé suivant l'une des revendications 14 à 16, caractérisé en ce qu'il consiste à lixivier la partie séparée et non dissoute de la lixiviation acide chaude dans une lixiviation acide super chaude par de l'acide de cellule à des températures de 90 à 130°C, de préférence de 95 à 110°C, et par 130 à 160 g/l, de préférence 140 à 150 g/l d'acide sulfurique avec introduction de SO₂, à séparer la matière solide non dissoute qui se forme et à l'évacuer sous forme de résidu de plomb et d'argent, et à renvoyer la solution à la lixiviation acide chaude.

Fig.2